# EUROPÄISCHE PATENTSCHRIFT

(11) **EP 1 819 492 B1**
(45) Veröffentlichungstag und Bekanntmachung des Hinweises auf die Patenterteilung: **10.09.2008**
(21) Anmeldenummer: 05850242.8
(22) Anmeldetag: 08.12.2005
(51) Int. Cl.: B29B 17/02

(54) **DEKONTAMINATION VON FLAKES**
DECONTAMINATION OF FLAKES
DECONTAMINATION DE COPEAUX

(30) Priorität: 10.12.2004 DE 102004059808
(43) Veröffentlichungstag der Anmeldung: 22.08.2007
(73) Patentinhaber: KRONES AG, 93073 Neutraubling (DE)
(72) Erfinder: HAASE, Arne, 24955 Harrislee (DE)
(86) Internationale Anmeldenummer: PCT/EP2005/013165
(87) Internationale Veröffentlichungsnummer: WO 2006/061224

(56) Entgegenhaltungen:
- EP-A- 1 174 235
- DE-A1- 19 517 210
- US-A- 5 566 832
- US-A1- 2002 041 942
- US-B1- 6 730 774

## Beschreibung

Die Erfindung betrifft ein Verfahren und eine Vorrichtung zur Reinigung und Dekontamination von Flakes nach dem Oberbegriff des Anspruchs 1 und nach dem Oberbegriff des Anspruchs 18.

Die Verwendung von Kunststoffen in der Lebensmittelindustrie erfreut sich immer größerer Beliebtheit. Um der steigenden Nachfrage bei knapper werdenden Rohstoffen gerecht zu werden, müssen die bereits verwendeten Kunststoffe recycliert und in den Stoffkreislauf zurückgeführt werden. Um die im Lebensmittelbereich verwendeten Kunststoffe nach dem Gebrauch wieder für Lebensmittel verwenden zu können, bedarf es einer sehr intensiven Reinigung bzw. Dekontamination, da die gesetzlichen Anforderungen für die Reinheit der recyclierten Kunststoffe dementsprechend hoch sind. Es bedarf daher sehr hoher Reinigungseffizienzen.

Im Stand der Technik sind bereits verschiedene Verfahren bekannt, wie Kunststoffflakes, insbesondere PET-Flakes, gereinigt und zur Wiederverwertung vorbereitet werden können.

So ist z. B. aus der JP 2002126664 ein Verfahren bekannt, bei dem die PET-Flakes in einen vertikalen Schräubenförderer, der mit Flüssigkeit gefüllt ist, gegeben werden um sie von Etikettenresten oder dgl. Oberflächenschmutz zu reinigen.

Aus der JP 2002086446 ist weiterhin ein Verfahren bekannt, bei dem zuerst PET-Flaschen gereinigt, in kleine Stücke zerhackt und dann einer nochmaligen Reinigung unterzogen werden.

Aus der JP 2003136531 ist weiterhin ein Verfahren bekannt, bei dem zur Reinigung von PET-Flakes Ultraschallwellen eingesetzt werden.

Die DE 195 17 210 A1 betrifft dabei ein Verfahren zum Herstellen von Formteilen aus Kunststoffmischmüll, wobei dieser mit einem Plasma behandelt wird, bevor weitere Schritte eingeleitet werden. Die Plasmabehandlung dient hauptsächlich zur Aktivierung bzw. Anregung der Oberflächen des Kuststoffmülls, so dass eine weitere Behandlung erleichtert wird.

Das Dokument US 5,566,832 zeigt ein Verfahren zum Trennen von Plastikpartikeln durch Flotation, wobei die Plastikpartikel vor der Flotation mit Plasma behandelt werden, so dass dadurch eine veränderte Oberfläche entsteht, deren geänderte Eigenschaften das Flotationsverfahren unterstützen.

Das Problem bei den beschriebenen Verfahren ist die Tatsache, dass jeweils nur Kontaminanten von der Oberfläche der Flakes entfernt werden. Die Kontaminanten, die in die PET-Flakes hinein diffundiert sind, werden durch diese Verfahren nicht entfernt. Eine Verwendung der mit diesen Verfahren gereinigten Flakes im Lebensmittelbereich ist somit nicht möglich.

Sollen die Flakes von Kontaminanten befreit werden, die sich in dem Material befinden, so werden diese nach dem Stand der Technik mit einer Temperaturbehandlung ausgetrieben, die bis zu einigen Stunden dauern kann und meist bei Temperaturen über 200°C stattfindet.

Das Problem bei diesen Temperaturverfahren ist einerseits die lange Behandlungsdauer und andererseits die hohe Temperatur, bei dem die Behandlung stattfindet, denn sowohl Zeit als auch Temperatur bedeuten hohe Kosten für den Prozess.

Es ist deshalb Aufgabe der vorliegenden Erfindung, ein Verfahren und eine Vorrichtung zur Reinigung und Dekontamination von Flakes zu schaffen, bei dem/bei der auch Kontaminanten entfernt werden, die sich im Kunststoffmaterial befinden und bei dem/bei der die Prozesskosten erheblich reduziert sind.

Erfindungsgemäß wird diese Aufgabe hinsichtlich des Verfahrens durch die Merkmale des Anspruchs 1 und hinsichtlich der Vorrichtung durch die Merkmale des Anspruchs 18 gelöst.

Werden die Kunststoffflakes auf diese Weise von einem ionisierten Gas umströmt, so tritt ein Reinigungseffekt auf, der völlig überraschend ist und im Detail nicht erklärt werden kann. Die inter- und intramolekularen Vorgänge bei der Wechselwirkung der gasförmigen Ionen mit den Kontaminanten auf bzw. in den Flakes sind nicht bekannt.

Das erfindungsgemäße Verfahren zur Reinigung und Dekontamination von Flakes wird insbesondere für zerkleinerte und kontaminierte Kunststoffflakes wie z. B. Flakes aus PET-Flaschen verwendet, wobei auch andere, zu Flakes zerkleinerte Kunststoffe, wie zum Beispiel HDPE, PP, PEN, PVC irgendwelche Polyolefine, PO, PA oder RPET mit diesem Verfahren behandelt werden können. Von sogenanntem RPET (R für Recycling) spricht man, wenn das zu verarbeitenden PET-Material bereits einer anderen Nutzung zugeführt war.

Unter Flakes werden alle Partikel bzw. Gegenstände verstanden, die nicht mehr der Größe oder der Form ihrer ursprünglichen Verwendungsgestalt entsprechen. So sind unter Flakes zum Beispiel auch Kunststofffolienreste zu verstehen, deren Dicke nur wenige Mikrometer, deren flächige Ausdehnung aber durchaus einige Quadratzentimeter oder mehr betragen kann. Es ist auch möglich, dass die Flakes beispielsweise aus gepressten bzw. verformten Kunststoffflaschen bestehen. Durch die Variation der Flakeabmessungen wird nicht die Funktion des Verfahrens sondern lediglich die Behandlungsdauer beeinflusst. Vorzugsweise weisen die Flakes eine durchschnittliche Partikelgröße von 4mm bis 7mm und eine Dicke von ca. 0,2mm bis 2mm auf.

In einer weiteren Weiterbildung der Erfindung können auch Kunststoffpellets und -kompaktate verarbeitet werden.

Bei der Anwendung des Verfahrens ist es egal, ob es sich bei den Kontaminanten um oberflächliche Verschmutzungen, wie z.B. Etiketten- oder Klebstoffreste oder um in die Flakes hineindiffundierte atomare/molekulare organische oder anorganische Verbindungen, Mikroben, Pilze oder ähnliches handelt.

Ein besonderer Effekt wird erzielt, wenn die Strömung, die bei der Einleitung des ionisierten Gases entsteht, nicht zu gering ist. Eine zu hohe Strömung hingegen bewirkt, dass das ionisierte Umströmungsmedium seine Wirkung nicht voll entfalten kann.

Möglicherweise liegt eine Erklärung der hohen Reinigungseffizienz darin, dass die Kontaminanten, die in die Flakes hineindiffundiert sind, sich nicht gleichmäßig im jeweiligen Flake im Bezug auf seine Dicke verteilen. Die meisten Kontaminaten befinden sich in den oberen Materialschichten.

Bei der Behandlung von Flakes mit ionisiertem Gas gibt es gemäß Weiterbildungen der Erfindung mehrere Möglichkeiten, insbesondere dass die Behandlung in einem flüssigen oder in einem gasförmigen Trägermedium stattfindet. Unter Trägermedium versteht man das nicht ionisierte Medium, in dem sich die Flakes während des Reinigungsvorganges innerhalb einer Reaktoreinheit befinden. Findet die Behandlung in einem flüssigen Medium statt, so wird dieses Trägermedium durch die Einwirkung des ionisierten Gases gleichzeitig gereinigt.

Gemäß einer Weiterbildung der Erfindung wird als flüssiges Medium eine Säure bzw. eine Base eingesetzt. Durch die Veränderung der Flakeoberfläche durch die Säure bzw. die Base wird der Reinigungseffekt des ionisierten Gases nochmals verstärkt. Nach einer bevorzugten Weiterbildung wird als flüssiges Trägermedium Wasser eingesetzt.

Nach einer Weiterbildung der Erfindung weist das flüssige Trägermedium eine Temperatur von 0°C bis 100°C, vorzugsweise von 20°C bis 70°C, in einer besonders bevorzugten Weiterbildung eine Temperatur zwischen 30°C und 60°C auf, da die gegenüber der Raumtemperatur erhöhte Temperatur des Trägermediums den Reinigungseffekt nochmals verstärkt.

Ein Parameter, mit dem die Reinigungseffizienz des Verfahrens verändert werden kann, ist der Ionengehalt des Trägermediums.

Nach einer weiteren Weiterbildung der Erfindung findet die Behandlung der Flakes in einem gasförmigen Trägermedium statt. In einer besonders bevorzugten Weiterbildung handelt es sich bei dem gasförmigen Trägermedium um Luft, da hier der Aufbau der Anlagen besonders einfach ist, weil keine von der Umgebung abgeschlossenen Systeme zur Behandlung der Flakes aufgebaut werden müssen. Ist auch hier das Trägermedium angewärmt, warm bzw. heiß, so können Prozessvorteile auf Grund höherer Reaktionsgeschwindigkeiten erzielt werden. Die Temperatur des Trägermediums bewegt sich in einem Rahmen zwischen -50°C und +250°C, wobei vorzugsweise eine Temperatur zwischen 50°C und 150 °C eingestellt wird.

Gemäß einer weiteren Weiterbildung der Erfindung besteht die Möglichkeit, die Flakes, die sich im gasförmigen Trägermedium befinden, mit mit ionisiertem Gas angereicherter Flüssigkeit zu überschwallen.

Nach einer anderen Weiterbildung der Erfindung findet die Behandlung der Flakes unter Inertgasatmosphäre statt, um ungewünschte Reaktionen zu verhindern.

Nach einer weiteren Weiterbildung der Erfindung findet die Behandlung der Flakes unter Vakuumbedingungen statt.

Vorzugsweise weist nicht nur das Trägermedium eine gegenüber der Raumtemperatur erhöhte Temperatur auf, sondern auch das ionisierte Gas. Es ist auch möglich, dass das Gas vor seiner Ionisierung erwärmt wird. Die Temperatur des Gases liegt zwischen -50°C und +250°C, wobei eine Temperatur zwischen 50°C und 150°C bevorzugt wird.

In einer bevorzugten Weiterbildung der Erfindung handelt es sich, unabhängig von dem verwendeten Trägermedium, bei dem die Flakes umströmenden ionisierten Gas um Luft. Der Vorteil von Luft liegt darin, dass der Prozess bei einem hohen Wirkungsgrad sehr billig auszuführen ist. Der Vorteil bei der Verwendung von anderen Gasen besteht darin, dass bestimmte erwünschte Reaktionen zwischen den Kontaminanten und dem ionisierten Gas auftreten können, die den Prozessablauf erleichtern und damit die Prozessgeschwindigkeit erhöhen. Auch hier gilt, dass die Erwärmung des zu ionisierenden Behandlungsgases Vorteile bei der Prozessführung bzw. bei den erzielten Prozesszeiten bringt.

Gemäß einer anderen Weiterbildung werden die Flakes vor der Behandlung mit ionisierter Luft einem unabhängigen Säuberungsvorgang unterzogen, der die Behandlung mit einer Säure oder einer Base einschließen kann. Diese Weiterbildung vereint die Vorteile der Behandlung der Flakes mit einer Säure/Base und des einfachen Aufbaus der Ionisationseinheit. Der unabhängige Säuberungsvorgang kann aber auch eine Vorbehandlung mit Alkoholen / alkoholischen Lösungen, eine Vorbehandlung in trockener Umgebung und/oder eine Vorbehandlung mit Tensiden einschließen.

Die Behandlungsdauer der Flakes liegt in einem Zeitfenster zwischen 10 Sekunden und 20 Minuten. In einer besonders bevorzugten Weiterbildung liegt die Behandlungsdauer zwischen einer und fünf Minuten, da die Reinigungseffizienz bei steigender Behandlungsdauer nicht mehr bemerkenswert steigt. Die Versuchsreihen haben sogar ergeben, dass bereits nach ca. 30 Sekunden eine Reinigungseffizienz von weit über 90 % auf bestimmte Verunreinigungen erreicht wird. Diese Werte hängen allerdings stark von der Dicke der zu reinigenden Flakes ab. Werden dickere Flakes gereinigt (z. B. Unterschied der Dicke zwischen Flakes aus dem Brustbereich einer PET-Flasche und aus dem Mündungsbereich einer PET-Flasche), so müssen längere Reinigungszeiten angewendet werden. Jedoch steigt auch bei diesen dickeren Flakes die Reinigungseffizienz nach einer Behandlungsdauer von ca. fünf Minuten im Vergleich zur aufgewendeten Zeit nicht mehr signifikant an.

Ein Vorteil an diesem Verfahren ist der, dass sowohl Kontaminanten entfernt werden, die sich in der Oberfläche der Flakes befinden, als auch solche, die an der Oberfläche der Flakes haften. Bei solche Kontaminanten kann es sich beispielsweise um Klebstoffreste, Etikettenreste oder andere organische oder anorganische Fremdverschmutzungen handeln.

Werden Reinigungsschritte bei zu recyclenden Kunststoffen in gasförmigen Medien insbesondere trocken durchgeführt, so besteht oftmals das Problem, dass sich die zu reinigenden Kunststoffe durch Reibung aneinander und auch andere Effekte elektrostatisch aufladen. Dieses Verfahren weist nun den Vorteil auf, dass durch das ionisierte Gas auch die elektrostatische Aufladung von den Flakes entfernt wird.

Es ist möglich, das Verfahren kontinuierlich, diskontinuierlich oder chargenweise zu betreiben.

Eine Vorrichtung zur Dekontamination von Kunststoffflakes weist zumindest einen Ionisator, ein Ionisationsrohr und eine Reaktoreinheit auf, wobei der Ionisator sowohl in der Reaktoreinheit als auch außerhalb dieser angebracht sein kann. Die Reaktoreinheit kann sowohl als eine von der Umgebung abschließbare als auch offene Einheit ausgebildet sein. Von der Umgebung abschließbar ist sie in aller Regel dann, wenn die Reaktion entweder unter Vakuum oder unter Schutzgasbedingungen ablaufen soll.

Gemäß einer bevorzugten Weiterbildung der Erfindung ist die Reaktoreinheit als Flüssigkeitsbehälter ausgebildet, der vorzugsweise zur Aufnahme von Wasser geeignet ist.

Die Reaktoreinheit kann aber auch ein für Gasfüllungen geeigneter Behälter sein, der entweder Gase in Unterdruck-, Normal- oder Überdruckbedingungen aufnehmen kann.

Das Ionisationsrohr zeichnet sich dadurch aus, dass es das ionisierte Gas vom Ionisator in die Reaktoreinheit befördert. Befindet sich der Ionisator in der Reaktoreinheit, wird unter Umständen kein Ionisationsrohr gebraucht, um das Gas mit den Flakes in Kontakt zu bringen. Vorzugsweise weist das Ionisationsrohr im Innenbereich der Reaktoreinheit über seinen Umfang verteilte Löcher auf, durch die das Gas in Richtung der Flakes verteilt werden kann. Es ist auch denkbar, das Ionisationsrohr aus Sintermaterial zu fertigen und / oder mit Membranen zu versehen, um das Gas zu verteilen. Möglich ist auch die Verwendung jeglicher anderer Art von Verteilern.

Nach einer Weiterbildung der Erfindung befindet sich vor oder hinter dem Ionisator ein Gebläse, das das Gas bzw. das ionisierte Gas in Strömung versetzt, um es in die Reaktoreinheit zu bringen.

Gemäß einer weiteren Weiterbildung befindet sich im Bereich des Gastransports zur Reaktoreinheit ein Heizmodul, das das zu ionisierende Gas bzw. das ionisierte Gas erwärmt bzw. erhitzt, bevor es in die Reaktoreinheit geführt wird.

Das Verfahren wird anhand folgender Zeichnungen näher erläutert. Dabei zeigen:
- Figur 1: eine Vorrichtung zur Durchführung des Verfahrens nach Anspruch 1,
- Figur 2: eine andere Vorrichtung zur Durchführung des Verfahrens,
- Figur 3: eine schematische Darstellung eines Reinigungsschrittes,
- Figur 4: eine grafische Darstellung der Reinigungseffizienz über der Behandlungszeit bei der Durchführung des Verfahrens nach Anspruch 1 mit dünnen "Wandflakes" und
- Figur 5: eine grafische Darstellung der Reinigungseffizienz über der Behandlungszeit bei der Durchführung des Verfahrens nach Anspruch 1 mit dicken "Halsflakes"

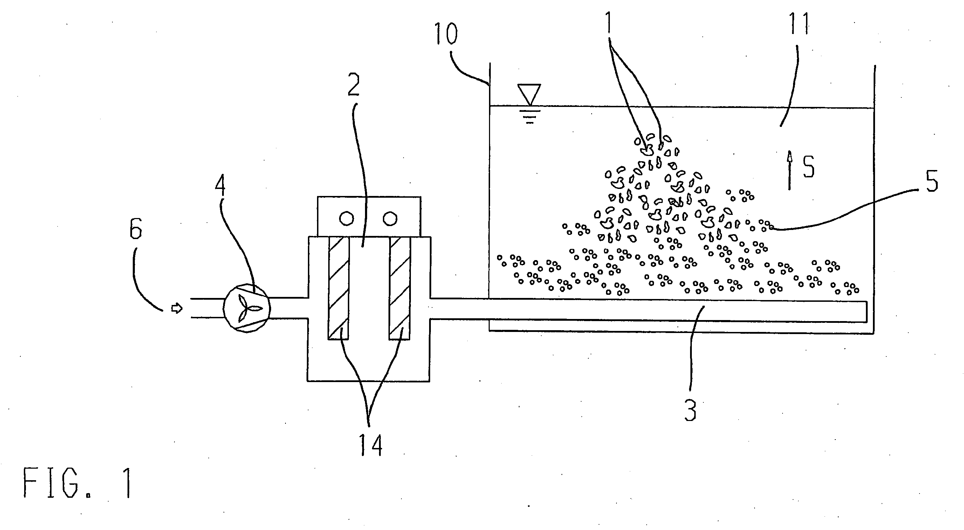

Figur 1 zeigt eine Ausführungsform einer Vorrichtung zur Durchführung des Verfahrens nach Anspruch 1. Als zu ionisierendes gasförmiges Medium wird in dieser Vorrichtung Luft verwendet. Die Luft wird in Richtung einer Gaszufuhr 6 über ein Gebläse 4 in einen Ionisator 2 geleitet. Im Ionisator 2 werden die Luftmoleküle an zwei Elektroden 14 vorbeigeführt und ionisiert. Nach der Ionisation werden die Luftmoleküle entlang eines Ionisationsrohres 3 in Richtung einer Reaktoreinheit 10 geleitet. Das Ionisationsrohr 3 weist innerhalb der Reaktoreinheit 10 kleine, hier nicht dargestellte Löcher auf, durch die ionisierte Luftmoleküle 5 in die Reaktoreinheit 10 treten können. In der Reaktoreinheit 10 befindet sich Wasser 11 als Trägermedium für zu behandelnde Flakes 1. In dieses, eine Temperatur von ca. 20°C bis 30°C aufweisende Wasser 11, sind die zu reinigenden Flakes 1 eingebracht. Die aus den Löchern des Ionisationsrohres 3 austretenden ionisierten Luftmoleküle 5 umströmen die Flakes 1 vom Boden der Reaktoreinheit 10 entgegen der Schwerkraft in Richtung der Wasseroberfläche in der Weise, dass die Kontaminanten aus den Flakes 1 ausgetragen und in Richtung einer Strömung S abtransportiert werden.

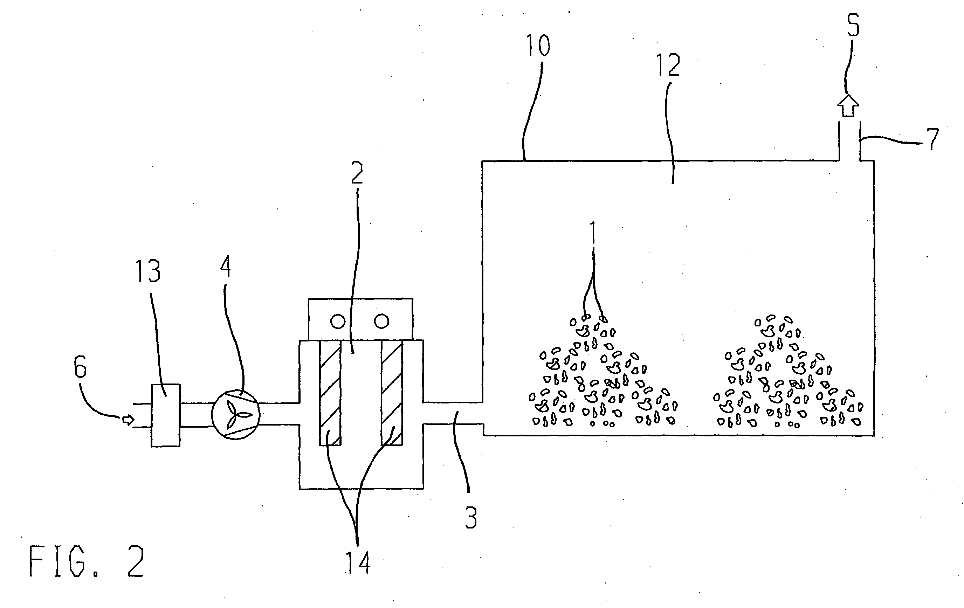

Figur 2 zeigt eine weitere Ausführungsform einer Vorrichtung zur Durchführung des Verfahrens nach Anspruch 1. Auch in diesem Beispiel wird als zu ionisierendes Gas Luft verwendet. Diese wird in Richtung der Gaszufuhr 6 über ein Heizmodul 13 geleitet, um ihr für den weiteren Prozessablauf eine gegenüber der Raumtemperatur erhöhte Temperatur zu verleihen. Nach der Erwärmungsphase wird die Luft über das Gebläse 4 in den Ionisator 2 geleitet. Dort wird sie wieder an zwei Elektroden 14 ionisiert und über das Ionisationsrohr 3 in die Reaktoreinheit 10 geleitet.

Die Reaktoreinheit 10 besteht aus einer geschlossenen Reaktionskammer mit einem Zulauf und einem Ablauf, wobei der Zulauf durch das Ionisationsrohr 3 und der Ablauf durch ein Abluftrohr 7 gebildet wird. Innerhalb der Reaktoreinheit 10 befindet sich im Gegensatz zum Ausführungsbeispiel nach Figur 1 ein gasförmiges Medium 12 in dem die Behandlung der Flakes stattfindet. Das gasförmige Medium 12 ist hier Luft, die eine Temperatur von ca. 100°C aufweist.

Die über das Ionisationsrohr 3 eingebrachte ionisierte Luft umströmt die Flakes 1 in der Weise, dass die Kontaminanten aus den Flakes 1 ausgetrieben und in Richtung der sich einstellenden Strömungsrichtung S über das Abluftrohr 7 ausgebracht werden. Der über das Ionisationsrohr 3 in die Reaktoreinheit 10 eingebrachte Luftstrom ist dabei so stark, dass die Flakes 1 aufgewirbelt werden und sich immer wieder durchmischen. Auf diese Weise wird eine optimale Reinigung aller Flakes 1 erreicht.

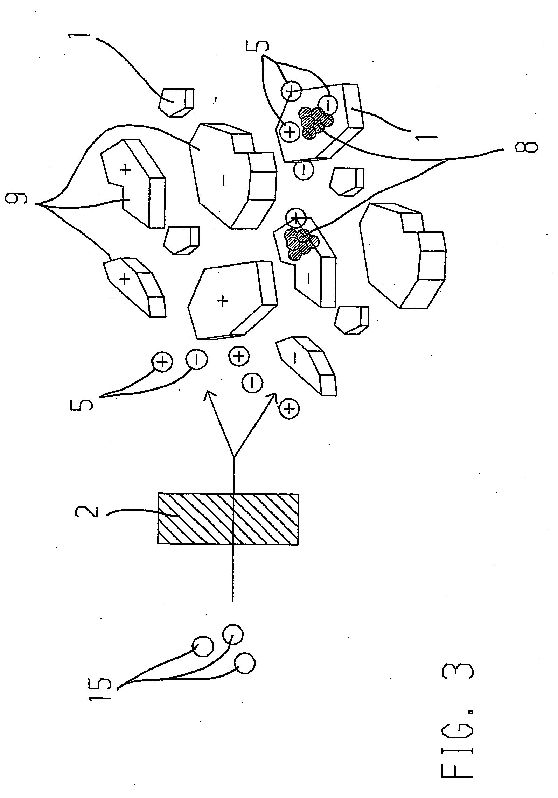

Figur 3 zeigt schematisch einen Teil des Reinigungs- bzw. Dekontaminationsvorganges, wie er mit dem Verfahren nach Anspruch 1 durchgeführt werden kann. Nicht ionisierte Gasmoleküle 15 werden durch das Vorbeiführen an dem Ionisator 2 ionisiert, und stehen nun zur Reinigung bzw. Dekontamination der Flakes 1 zur Verfügung.

Beim Vorbeiströmen der ionisierten Luftmoleküle 5 an den mit Kontaminanten 8 versehenen Flakes 1 lösen diese die Kontaminanten 8 heraus und transportieren sie ab.

Existieren inzwischen auf Grund einiger Umstände statisch aufgeladene Flakes 9 oder befinden sich auf Flakes 1 auf Grund bestimmter Umstände statisch aufgeladene Schmutzteilchen, so bewirkt die Strömung der ionisierten Luftmoleküle 5 um die Flakes 1 bzw. die statisch geladenen Flakes 9 eine Neutralisierung der statischen Aufladung. Nach einer sich an der Dicke der Flakes 1 orientierenden Behandlungszeit T sind die Kontaminanten bzw. die statische Aufladung der Flakes 1 bzw. der an deren Oberfläche festgelegten Schmutzpartikel ausgebracht und die Flakes stehen für weitere Behandlungs- bzw. Bearbeitungsschritte zur Verfügung.

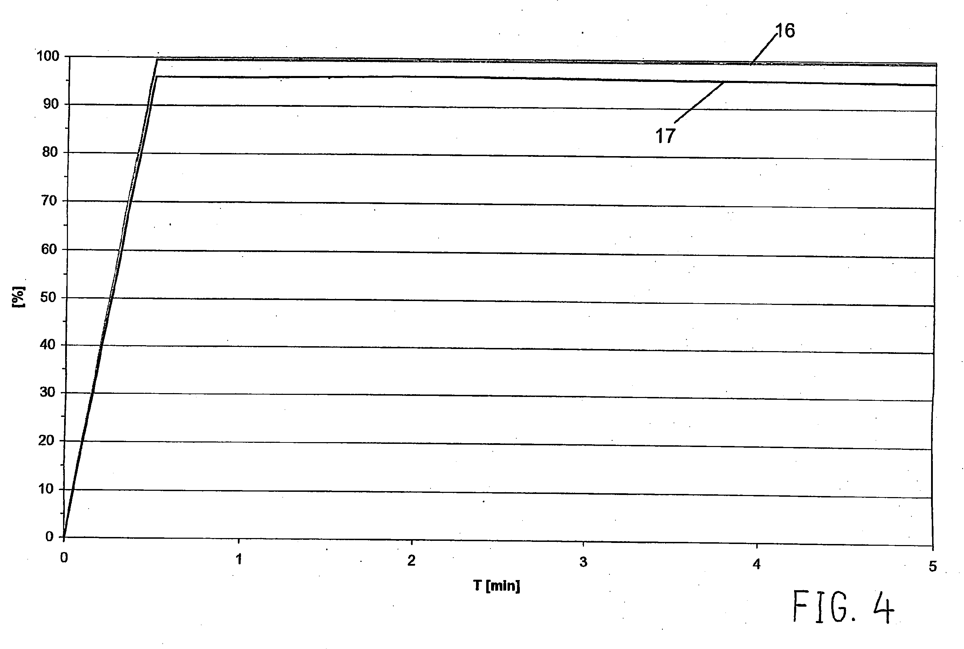

Die Kurven in Figur 4 stellen den Verlauf der Reinigungseffizienz in Prozent über der Behandlungszeit T von Flakes nach dem Verfahren von Anspruch 1 dar. Bei der Versuchsdurchführung wurden dünne Wandflakes in einer Vorrichtung nach Figur 1 behandelt. Unter "dünn" werden hier Flakes verstanden, deren Dicke kleiner oder gleich 0,5 mm beträgt. Zuvor wurden die Flakes unter definierten Bedingungen mit den Kontaminaten Toluol und Benzophenon versehen. Die beiden Kurven zeigen die Reinigungseffizienz über der Behandlungszeit T von mit Toluol verschmutzten Partikeln 16 und mit Benzophenon verschmutzten Partikeln 17. Dabei hat sich der äußerst überraschende Effekt eingestellt, dass nach einer Behandlungszeit von 30 Sekunden das Toluol bereits zu 99,5 Prozent und das Benzophenon zu 96,0 Prozent ausgetragen ist. Ebenfalls sehr überraschend ist das Ergebnis, dass bei diesen dünnwandigen Flakes eine Verlängerung der Behandlungszeit keinen höheren Austrag der Kontaminanten 8 mehr bewirkt. So bleiben die Reinigungseffizienzen gegenüber Toluol bei den Messwerten bei einer, zwei bzw. fünf Minuten bei 99,6 Prozent, die gegenüber Benzophenon bleiben bei ca. 96 Prozent.

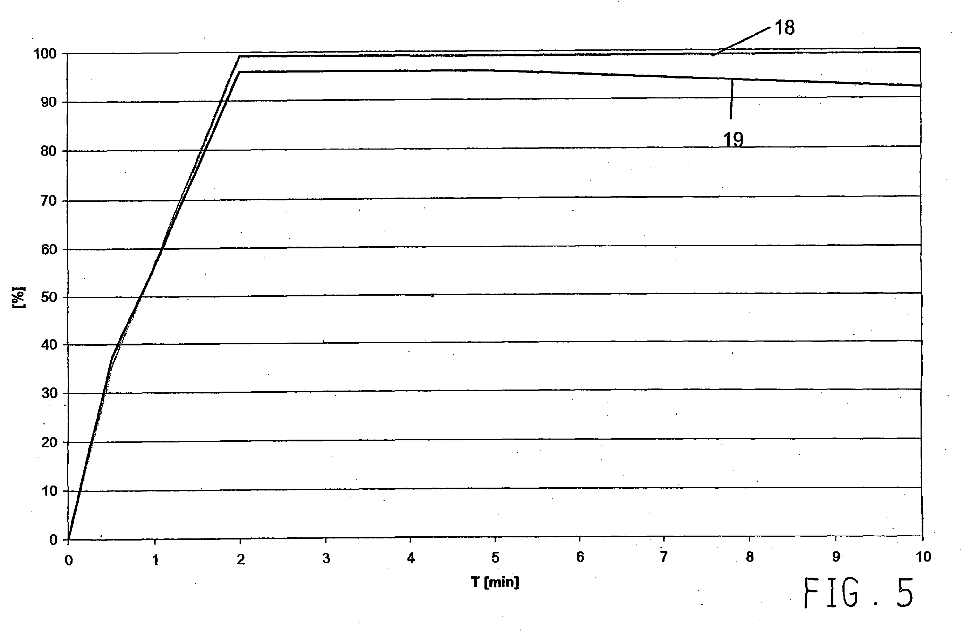

In einer Vorrichtung nach Figur 1 wurden auch dicke Flakes (ca. 1mm bis 2,5mm) nach einem Verfahren gemäß Anspruch 1 behandelt. In Figur 5 sind die Reinigungseffizienzen bei den Kontaminanten Toluol 18 und Benzophenon 19 über der Behandlungszeit T aufgetragen. Auch bei diesen dickeren Flakes hat sich der sehr überraschende Effekt bestätigt, dass nach einer relativ kurzen Behandlungszeit T Reinigungseffizienzen jenseits der 95 Prozent verwirklichen lassen. Allerdings steigt die Behandlungszeit aufgrund der höheren Dicke an. Nach 30 Sekunden hat man gegenüber Toluol eine Reinigungseffizienz von 35,4 Prozent und gegenüber Benzophenon 36,8 Prozent. Nach einer Behandlungszeit T von zwei Minuten finden sich in den behandelten Flakes nur noch 0,8 Prozent Toluol und 4,1 Prozent Benzophenon der Anfangskonzentration. Auch hier ist es wiederum ersichtlich, dass die Reinigungseffizienzen sehr schnell ihren Maximalwert von jeweils über 95 Prozent erreichen.

## Patentansprüche

1. Verfahren zur Reinigung und Dekontamination von zu Flakes (1) zerkleinerten kontaminierten Kunststoffen, insbesondere PET, wobei die Flakes (1) von einem ionisierten Gas umströmt werden, **dadurch gekennzeichnet, dass** sich die Flakes (1) bei der Behandlung mit ionisiertem Gas in einem flüssigen Medium (11) befinden.

2. Verfahren nach Anspruch 1, **dadurch gekennzeichnet, dass** es sich bei den Flakes (1) aus Kunststoff um RPET handelt.

3. Verfahren nach wenigstens einem der Ansprüche 1 bis 2, **dadurch gekennzeichnet, dass** durch den Schritt der Dekontamination in die Flakes (1) diffundierte Kontaminanten (8) entfernt werden.

4. Verfahren nach wenigstens einem der Ansprüche 1 bis 3, **dadurch gekennzeichnet, dass** sich die Flakes (1) bei der Behandlung mit ionisiertem Gas in einem gasförmigen Medium (12), vorzugsweise Luft befinden.

5. Verfahren nach Anspruch 1, **dadurch gekennzeichnet, dass** es sich bei dem flüssigen Medium (11) um Wasser handelt.

6. Verfahren nach Anspruch 1, **dadurch gekennzeichnet, dass** es sich bei dem flüssigen Medium (11) um ein saures Medium handelt.

7. Verfahren nach Anspruch 1, **dadurch gekennzeichnet, dass** es sich bei dem flüssigen Medium (11) um ein alkalisches Medium handelt.

8. Verfahren nach Anspruch 5 bis 7, **dadurch gekennzeichnet, dass** das flüssige Medium (11) eine Temperatur von 0°C - 100°C, vorzugsweise von 20°C - 70°C am Besten jedoch von 30°C - 60°C aufweist.

9. Verfahren nach Anspruch 4, **dadurch gekennzeichnet, dass** das gasförmige Medium eine Temperatur von 0°C bis 150°C, vorzugsweise von 20°C bis 80 °C aufweist.

10. Verfahren nach wenigstens einem der vorangegangenen Ansprüche, **dadurch gekennzeichnet, dass** es sich bei dem ionisierten Gas um Luft handelt.

11. Verfahren nach wenigstens einem der vorangegangenen Ansprüche, **dadurch gekennzeichnet, dass** es sich bei dem ionisierten Gas um ein Plasma handelt.

12. Verfahren nach wenigstens einem der vorangegangenen Ansprüche 1 bis 11, **dadurch gekennzeichnet, dass** das ionisierte Gas vor der Zuführung zu den Flakes (1) erwärmt wird, insbesondere auf eine Temperatur zwischen 20°C und 80°C.

13. Verfahren nach wenigstens einem der vorangegangenen Ansprüche, **dadurch gekennzeichnet, dass** die Behandlungsdauer der Flakes (1) im ionisierten Gasstrom zwischen 10 Sekunden und 20 Minuten, vorzugsweise zwischen 1 Minute und 5 Minuten liegt.

14. Verfahren nach wenigstens einem der vorangegangenen Ansprüche, **dadurch gekennzeichnet, dass** durch den Schritt der Dekontamination an der Oberfläche der Flakes (1) befindliche Kontaminanten (8) entfernt werden.

15. Verfahren nach Anspruch 12, **dadurch gekennzeichnet, dass** der ionisierte Gasstrom zur Beseitigung der elektrostatischen Aufladung der Flakes (1) dient.

16. Verfahren nach wenigstens einem der vorangegangenen Ansprüche, **dadurch gekennzeichnet, dass** in einem separaten Schritt vor der Dekontamination der Flakes (1) mit ionisiertem Gas ein Säuberungsvorgang zur Reinigung der Oberfläche der Flakes (1) in einer Lauge, in einer Säure, in einer alkoholischen Lösung oder in trockener Umgebung durchgeführt wird.

17. Vorrichtung zur Reinigung und Dekontamination von zu Flakes (1) zerkleinerten kontaminierten Kunststoffen, insbesondere PET, mit einem Ionisator (2), einem Ionisationsrohr (3) und einer Reaktoreinheit (10), wobei die sich in der Reaktoreinheit (10) befindlichen Flakes von einem ionisierten Gas umströmt werden, **dadurch gekennzeichnet, dass** die Reaktoreinheit (10) mit einem flüssigen Medium (11) gefüllt ist.

18. Vorrichtung nach Anspruch 17, **dadurch gekennzeichnet, dass** das Ionisationsrohr (3) im Bereich der Reaktoreinheit (10) kleine Löcher aufweist, durch die das ionisierte Gas strömt.

19. Vorrichtung nach Anspruch 17 und / oder 18, **dadurch gekennzeichnet, dass** vor oder hinter dem Ionisator (2) ein Gebläse (4) angebracht ist.

20. Vorrichtung nach wenigstens einem der Ansprüche 17 bis 19, **dadurch gekennzeichnet, dass** vor oder hinter dem Ionisator (2)ein Heizmodul (13) angebracht ist.

21. Vorrichtung nach wenigstens einem der Ansprüche 17 bis 20, **dadurch gekennzeichnet, dass** die Reaktoreinheit (10) mit einem gasförmigen Medium (12), insbesondere Luft gefüllt ist.

22. Vorrichtung nach wenigstens einem der Ansprüche 17 bis 21, **dadurch gekennzeichnet, dass** die Reaktoreinheit (10) mit Vakuum beaufschlagt ist.

## Claims

1. Process for cleaning and decontaminating plastics, particularly PETs that have been crushed and/or ground into flakes, whereby an ionized gas is passed over the flakes (1), **characterized in that** the flakes (1) are in a liquid medium (11) when treated with ionized gas.

2. Process in accordance with claim 1, **characterized in that** the plastic flakes (1) come from rPET (recycled PET).

3. Process in accordance with at least one of claims 1 to 2, **characterized in that** contaminants (8) that have diffused into the flakes (1) are removed in the decontamination stage.

4. Process in accordance with at least one of claims 1 to 3, **characterized in that** the flakes (1) are in a gaseous medium (12), preferably air, when treated with ionized gas.

5. Process in accordance with claim 1, **characterized in that** the liquid medium (11) is water.

6. Process in accordance with claim 1, **characterized in that** the liquid medium (11) is an acid one.

7. Process in accordance with claim 1, **characterized in that** the liquid medium (11) is alkaline.

8. Process in accordance with claims 5 to 7, **characterized in that** the liquid medium (11) is at a temperature of 0 - 100°C, preferably 20 - 70°C at best, but nevertheless from 30 - 60°C.

9. Process in accordance with claim 4, **characterized in that** the gaseous medium has a temperature from 0 to 150°C, preferably from 20 to 80°C.

10. Process in accordance with at least one of the preceding claims, **characterized in that** the ionized gas is air.

11. Process in accordance with at least one of the preceding claims, **characterized in that** the ionized gas is a plasma.

12. Process in accordance with at least one of the preceding claims 1 to 11, **characterized in that** the ionized gas is heated to a temperature between 20 and 80°C before it is fed onto the flakes (1).

13. Process in accordance with at least one of the preceding claims, **characterized in that** the period of treatment of the flakes (1) in the ionized gas flow lasts between 10 seconds and 20 minutes, preferably between 1 and 5 minutes.

14. Process in accordance with at least one of the preceding claims, **characterized in that** the decontamination stage removes contaminants (8) from the surface of the flakes (1).

15. Process in accordance with claim 12, **characterized in that** the flow of ionized gas serves to remove electrostatic charges on the flakes (1).

16. Process in accordance with at least one of the preceding claims, **characterized in that** a washing process to clean the surface of the flakes (1), in a lye solution, in an acid, in an alcoholic solution or in a dry environment, is carried out in a separate stage before the decontamination of the flakes (1) with ionized gas.

17. Installation, for cleaning and decontaminating plastics, particularly PETs, that have been crushed and/or ground into flakes (1), with an ionizator (2), an ionization tube (3) and a reactor nit (10), whereby an ionized gas flows round the flakes in the reactor unit (10), **characterized in that** the reactor unit (10) is filled with a liquid medium (11).

18. Installation in accordance with claim 17, **characterized in that** the ionization tube (3) has small holes, in the area of the area of the reactor unit (10), through which the ionized gas flows.

19. Installation in accordance with claim 17 and/or 18, **characterized in that** a ventilator (4) is mounted in front of or behind the ionizator (2).

20. Installation in accordance with at least one of claims 17 to 19, **characterized in that** a heating module (13) is mounted in front of or behind the ionizator (2).

21. Installation in accordance with at least one of claims 17 to 20, **characterized in that** the reactor unit (10) is filled with a gaseous medium (12), particularly air.

22. Installation in accordance with at least one of claims 17 to 21, **characterized in that** the reactor unit (10) is acted on by a vacuum.

## Revendications

1. Procédé pour nettoyer et décontaminer des matières plastiques contaminées réduites en fragments (1) notamment de matières plastiques PET, les fragments (1) étant balayés par un gaz ionisé,
**caractérisé en ce que**
lors du traitement avec le gaz ionisé, les fragments (1) se trouvent dans un milieu fluide (11).

2. Procédé selon la revendication 1,
**caractérisé en ce que**
les fragments (1) des matières plastiques sont des fragments de RPET.

3. Procédé selon au moins l'une des revendications 1 à 2,
**caractérisé en ce que**
les tables de décontamination éliminent les produits de contamination (8) diffusés dans les fragments (1).

4. Procédé selon au moins l'une des revendications 1 à 3,
**caractérisé en ce que**
lors du traitement avec le gaz ionisé, les fragments (1) se trouvent dans un milieu gazeux (12) notamment de l'air.

5. Procédé selon la revendication 1,
**caractérisé en ce que**
le milieu fluide (11) est de l'eau.

6. Procédé selon la revendication 1,
**caractérisé en ce que**
le milieu fluide (11) est un milieu acide.

7. Procédé selon la revendication 1,
**caractérisé en ce que**
le milieu fluide (11) est un milieu alcalin.

8. Procédé selon l'une des revendications 5 à 7,
**caractérisé en ce que**
le milieu fluide (11) est à une température comprise entre 0°C et 100°C, de préférence entre 20°C et 70°C et notamment entre 30°C et 60°C.

9. Procédé selon la revendication 4,
**caractérisé en ce que**
le milieu gazeux a une température comprise entre 0°C et 150°C, de préférence entre 20°C et 80°C.

10. Procédé selon au moins l'une des revendications précédentes,
**caractérisé en ce que**
le gaz ionisé est de l'air.

11. Procédé selon au moins l'une des revendications précédentes,
**caractérisé en ce que**
le gaz ionisé est un plasma.

12. Procédé selon l'une des revendications 1 à 11,
**caractérisé en ce qu'**
on chauffe le gaz ionisé avant de l'appliquer aux fragments (1) notamment à une température comprise entre 20°C et 80°C.

13. Procédé selon au moins l'une des revendications précédentes,
**caractérisé en ce que**
la durée de traitement des fragments (1) dans la veine de gaz ionisé est comprise entre 10 secondes et 20 minutes et de préférence entre 1 minute et 5 minutes.

14. Procédé selon au moins l'une des revendications précédentes,
**caractérisé en ce que**
l'étape de décontamination élimine les produits de contamination (8) à la surface des fragments (1).

15. Procédé selon la revendication 12,
**caractérisé en ce que**
la veine de gaz ionisé élimine la charge électrostatique des fragments (1).

16. Procédé selon au moins l'une des revendications précédentes,
**caractérisé en ce que**
dans une étape distincte, avant la décontamination des fragments (1) avec le gaz ionisé, on effectue une opération de nettoyage pour nettoyer la surface des fragments (1) dans une lessive, dans un acide, dans une solution alcoolisée ou dans un environnement sec.

17. Dispositif de nettoyage et de décontamination de matières plastiques notamment de matières plastiques PET contaminées, réduites en fragments (1), comportant un ionisateur (2), un tube d'ionisation (3) et un réacteur (10), les fragments se trouvant dans le réacteur (10) étant balayés par un gaz ionisé,
**caractérisé en ce que**
l'unité de réaction (10) est remplie d'un milieu fluide (11).

18. Dispositif selon la revendication 17,
**caractérisé en ce que**
le tube d'ionisation (3) comporte de petits trous dans la région du réacteur (10) à travers lesquels passe le gaz ionisé.

19. Dispositif selon la revendication 17 et/ou 18,
**caractérisé par**
une machine soufflante (4) en amont ou en aval de l'ionisateur (2).

20. Dispositif selon au moins l'une des revendications 17 à 19,
**caractérisé par**
un module de chauffage (13) en amont ou en aval de l'ionisateur (2).

21. Dispositif selon au moins l'une des revendications 17 à 20,
**caractérisé en ce que**
le réacteur (10) est rempli d'un milieu à l'état gazeux (12) notamment avec de l'air.

22. Dispositif selon au moins l'une des revendications 17 à 21,
**caractérisé en ce que**
le réacteur (10) est mis sous vide.
